# EUROPEAN PATENT SPECIFICATION

(11) **EP 1 833 216 B1**
(45) Date of publication and mention of the grant of the patent: **14.07.2010**
(21) Application number: 06004582.0
(22) Date of filing: 07.03.2006
(51) Int. Cl.: H04L 29/06

(54) **Method and system for mediation of authentication within a communication network**
Verfahren und System zur Authentifizierungsvermittlung in einem Kommunikationsnetz
Procédé et système de médiation d'authentification au sein d'un réseau de communication

(43) Date of publication of application: 12.09.2007
(73) Proprietor: HITACHI, LTD., Chiyoda-ku Tokyo 100-8280 (JP)
(72) Inventor: Aoshima, Hirokazu, 06400 Cannes (FR)
(74) Representative: MERH-IP Matias Erny Reichl Hoffmann

(56) References cited:
- US-A1- 2005 114 701
- SCHNEIER B: "Applied Cryptography, Protocols, Algorithms, and Source Code in C" APPLIED CRYPTOGRAPHY. PROTOCOLS, ALGORITHMS, AND SOURCE CODE IN C, NEW YORK, JOHN WILEY & SONS, US, 1996, pages 47-65,566, XP002230276 ISBN: 0-471-11709-9
- TARDO J J ET AL: "SPX: global authentication using public key certificates" PROCEEDINGS OF THE SYMPOSIUM ON RESEARCH IN SECURITY AND PRIVACY. OAKLAND, MAY 20 - 22, 1991, LOS ALAMITOS, IEEE COMP. SOC. PRESS, US, vol. SYMP. 12, 20 May 1991 (1991-05-20), pages 232-244, XP010024226 ISBN: 0-8186-2168-0

## Description

The invention relates to a method and a system for mediation of authentication within a communication network between at least one first node managed by at least one first authentication server and at least one second node managed by at least one second authentication server using a mediation server.

In modern communication networks and distributed systems authentication is one of the essential features for enabling safe service provision or/and access to resources. Authentication is required in order to avoid risks such as being manipulated by unexpected peers, giving information to unexpected peers, etc. So, it is very important to authenticate peers before a communication is set up with the peers.

In the prior art, substantially two methods have been proposed to achieve authentication between two peers. In the first method, the communication source node and the communication destination node exchange certificates of public keys. Such a certificate comprises the public key of the node together with a string that identifies the unit that the comprised public key belongs to. The unit could be, for example, a user, but also a host or a special device. The public key and the ID of the node must be signed by a certificate authority. This signature must also be part of the certificate. A signature is made using the private key of a certificate authority. It is assumed that the public key of the certificate authority is well-known. For example, several public keys of well-known certificate authorities are incorporated into today's web browsers and these public keys of the certificate authorities are distributed together with these programs. After the two com-680,3-63.282-Ma/TB munication nodes have received the certificate of the counter part node, they need to verify the validity and correctness of the certificate. This is done using the well-known public key of the certificate authority.

The major drawback of this approach is that the communication nodes need to know several public keys of certificate authorities. Furthermore, the nodes incur the load for decrypting the certificates. This poses especially a problem when a communication node needs to communicate with a lot of other nodes.

Therefore, it has been proposed to use so-called authentication servers. An authentication server keeps large tables in which it stores information about the nodes it manages. In general, these tables contain for each node the node ID, several attributes of the managed nodes-like, for example, the certificate of the node, and in general also conditions that a counterpart node must meet in order to be able to communicate with the node.

The functionality of such an authentication server has been disclosed, for example, in US 2005/0 226 424 A1. In this prior art, the process of setting up a communication channel between a first communication node and a second communication node works as follows: First, the authentication server is authenticated at the communication node. Then, the communication node is authenticated at the authentication server.

The authentication server verifies the validity of the certificate of the communication node with the help of a validation server. After that, the communication node and the authentication server exchange commonly owned information plus an electronic signature to verify that both possess the private key that corresponds with the public key that they stated in their public key certificate. If all these security tests are successfully passed, the authentication server produces a symmetric key that it used as a session key between the communication node and the authentication server. In this way, an authenticated encrypted connection is set up. The same protocol is used to set up an authenticated encrypted communication channel between the authentication server and the communication node that the first communication node wants to communicate with. After having set up also this encrypted connection, the authentication server transmits the connection request from the first communication node to the second communication node. The second communication node judges as to whether or not the first communication node is permitted to connect to the second communication node.

The judgment result is given back to the authentication server. If the connection is permitted, the authentication server produces a session key that the first communication node and the second communication node should use for their encrypted communication. This session key is distributed from the authentication server to the first communication node and to the second communication node. Now, the two communication nodes can communicate with each other over an encrypted connection.

The major drawback of the described authentication server scenario is that it is not always true that all nodes are managed by a single authentication server. There are cases where nodes are managed by a plural of authentication servers that belong to different management domains. It is necessary for those authentication servers to cooperate in order to authenticate nodes managed by other authentication servers. It is also necessary to accept the management done by other servers in order to achieve such a cooperation. This means that authentication servers need to trust other authentication servers in a sense of management policy, trustworthiness of information managed by the servers and/or processes executed by the authentication servers.

It would be possible to establish mutual agreements between the authentication servers. However, if the number of authentication servers becomes big, the authentication servers must keep large tables of other well-known authentication servers. This would be inefficient in a large scale scenario. Accordingly, it is required to have a solution for such a situation.

Moreover, SCHNEIER, B., "Applied Cryptography, Protocols, Algorithms, and Source Code in C", New York, John Wiley & Sons, 1996, pages 47-65 describes a key distribution center protocol. The protocol assumes that Alice and Bob, users of a network, each share a secret key with a Key Distribution Center called Trent. These keys must be in place before the start of the protocol. In this protocol, the following steps are performed:
1. Alice calls Trent and requests a session key to communicate with Bob.
2. Trent generates a random session key, he encrypts two copies of it: one in Alice's key and the other in Bob's key. Trent sends both copies to Alice.
3. Alice decrypts her copy of the session key.
4. Alice sends Bob his copy of the session key.
5. Bob decrypts his copy of the session key.
6. Both Alice and Bob use the session key to communicate securely.

Furthermore, US 2005/0114701 A1 discloses a technique for federating identity management within a distributed portal server. Identities are managed across autonomous security domains which may be comprised of independent trust models, authentication services, and user enrollment services.

An object of the invention is to provide a method, a system, and a computer software product for the secure cooperation of authentication servers that do not possess pre-established mutual agreements with each other.

This objective is accomplished by the features of the independent claims. Further aspects and preferred embodiments of the invention are defined by the dependent claims.

According to the invention a method for mediation of authentication within a communication network may be provided, wherein the method may comprise the steps of sending a request to mediate authentication between a first node and at least a second node from the first node to a mediation means, receiving said request by the mediation means, providing authentication between the mediation means and the second node, providing mediation of authentication between the first node and the second node, and/or establishing a connection between the first node and the second node.

With this method it is possible for two communication nodes to establish an authenticated and encrypted communication with each other, even if they belong to two different management domains.

The mediation means may comprise a mediation server. Furthermore, the mediation means may comprise a first authentication server and/or a second authentication server.

According to the invention the method for mediation of authentication within a communication network between at least one first node managed by at least one first authentication server and at least one second node managed by at least one second authentication server using a mediation server may comprise the steps of establishing an encrypted connection between the first node and the first authentication server, sending a request to establish an encrypted connection between the first node and the second node managed by the second authentication server from the first node to the first authentication server, providing a mediation server being able to mediate authentication between the first authentication server and the second authentication server, establishing an encrypted connection between the first authentication server and the mediation server, sending the request to establish a connection between the first node and the second node managed by the second authentication server from the first authentication server to the mediation server, establishing an encrypted connection between the mediation server and the second authentication server, sending an authentication request from the mediation server to the second authentication server, sending an authentication response from the second authentication server to the mediation server, mediating between the first authentication server and the second authentication server at the mediation server, distributing a mediation result from the mediation server to at least one of the first node and the second node, and/or establishing an encrypted connection between the first node and the second node.

In the sense of the invention, a server may be any means that is able to provide a service.

According to the invention, there may exist only one mediation server in the communication network or there may be a set of mediation servers. If there is more than one mediation server present, which is able to mediate authentication between the first authentication server and the second authentication server, a mediation server must be selected. If there is only one mediation server present in the communication network, this mediation server is used to mediate authentication between the first authentication server and the second authentication server.

The method for mediation of authentication within a communication network according to the invention has the advantage that the authentication servers do not need to have a pre-established mutual agreement with each other. In fact, they do not even need to know each other. The authentication between the first authentication server and the second authentication server is performed by a mediation server. Thus, the authentication servers only need to be registered as a target for mediation at mediation servers in order to be able to set up an authenticated and encrypted connection with other formerly not known authentication servers. This allows to flexibly mediate authentication between different management domains. Especially, if the number of authentication servers is very large the approach of having mediation servers is more efficient. Without mediation servers the authentication servers would need to possess large tables that store information about other authentication servers like, for example, the certificates of the authentication servers.

Preferably, the step of establishing an encrypted connection between the first node and the first authentication server also comprises the additional steps of authenticating the first node at the first authentication server and/or authenticating the first authentication server at the first node. In general, these authentications can be done because the first node registered itself at the first authentication server and transmitted its certificate during this time. Also the first authentication server sent its certificate to the first node. By referring back to the certificate authority that issued the certificate the validity of the certificate can be verified. However, the invention is not restricted to a special way how certificates are issued, what they contain and how certificates are validated and verified. In fact, any viable method for authenticating may be used.

According to one embodiment of the invention, the request to establish an encrypted connection between the first node and the second node managed by the second authentication server comprises an identifier of the second node, an identifier of the second authentication server, and/or configuration information for the requested encrypted connection between the first node and the second node. The configuration information, for example, may contain a reference to a preferred encryption algorithm or a preferred encryption key length.

The step of providing a mediation server may comprise any of the steps of sending a list of at least one mediation server where the first authentication server is registered as a target for mediation from the first authentication server to the second authentication server, selecting a mediation server where also the second authentication server is registered as a target for mediation from the list at the second authentication server, and/or sending an identifier of the selected mediation server from the second authentication server to the first authentication server.

In this way, the two authentication servers can negotiate a common mediation server at which both authentication servers are registered as a target for mediation. This method of negotiating is very easy. Only the two parties that are interested in the result of the negotiation are involved. Thus, the two parties are self-sufficient. A third party is not involved. Therefore, the likelihood of failures is reduced.

According to a very effective mode for carrying out the invention, the list of mediation servers is ordered according to a priority of the mediation servers. This means that the first authentication server states which mediation servers it prefers. The second authentication server can choose an appropriate mediation server based on the preferences of the first authentication server in combination with the preferences of the second authentication server. In this way, a suitable mediation server can be found.

The negotiation process may also comprise more than two messages. It is possible that the list of mediation servers that the first authentication server sends to the second authentication server does not contain a mediation server at which also the second authentication server is registered as a target for mediation. For example, the first authentication server proposes some, but not all of its preferable mediation servers in the list, since the first authentication server might be registered at so many mediation servers that listing them all in a single list would lead to a too long list. In such a case, if the second authentication server is unable to find any common mediation server in the list, the second authentication server may send a counter proposal of mediation servers or may ask for a further list of possible mediation servers. Then the first authentication server would respond to the second authentication server. In this way, the negotiation process may comprise more than two messages.

Preferably, the step of providing a mediation server is performed by using information about previous selections of mediation servers that is stored on the first authentication server. This means, each time the first authentication server receives a selection of the second authentication server concerning the selecting of a mediation server the first authentication server stores this selection. Whenever the first authentication server wants to find once again a mediation server that can mediate the authentication between the second authentication server and the first authentication server this stored information is used. This means that former selection decisions are cached in order to make selection processes faster. If cached information is available for a decision situation, there is no need to perform an intricate selection process.

Another way that the first authentication server may use to provide a mediation server is sending a request as to whether the mediation server can mediate the second authentication server to each mediation server using unicasting. In this approach, there is no need for the second authentication server to be involved into the selection process. This may be preferable, if one of the goals is to keep the workload at the second authentication server low.

The first authentication server may also provide a mediation server by sending a request as to whether the mediation server can mediate the second authentication server to each mediation server using broadcasting. This keeps the workload for the first authentication server low, because the first authentication server needs to send only one massage. However, this may lead to an excess of messages that are relayed within the network.

Therefore, the first authentication server may provide a mediation server by sending a request as to whether the mediation server can mediate the second authentication server to each mediation server using multicasting. Multicasting leads to a smaller number of messages in comparison to broadcasting. It may be especially well suited to use application layer multicasting. For example, a peer-to-peer substrate may be used to relay messages to the mediation servers.

In a preferred manner, the step of establishing an encrypted connection between the first authentication server and the mediation server further comprises the steps of authenticating the first authentication server at the mediation server and/or authenticating the mediation server at the first authentication server. This authentication may be performed using certificates of public keys. Preferably, the certificates are verified using the server of a certificate authority. However, the invention is not restricted to using a special protocol or a special method for authentication.

Preferably, the request to establish a connection between the first node and the second node managed by the second authentication server from the first authentication server to the mediation server further comprises an identifier of the first node, at least one attribute of the first node, and/or at least one condition that a counterpart node must meet to be able to communicate with the first node.

Advantageously, the step of establishing an encrypted connection between the mediation server and the second authentication server further comprises the steps of authenticating the mediation server at the second authentication server and/ or authenticating the second authentication server at the mediation server.

Preferably, the authentication request that is sent from the mediation server to the second authentication server comprises an identifier of the second node. The second authentication server searches through its tables and finds out whether the second node is registered at the second authentication server. If this is the case, an authentication response is given back to the mediation server. Preferably, the authentication response comprises at least one attribute of the second node, at least one condition that a counterpart node must meet to be able to communicate with the second node, and/or configuration information for an encrypted connection with the second node.

Preferably, the step of mediating between the first authentication server and the second authentication server at the mediation server comprises the steps of determining if the first node is acceptable for the second node as a counter part of communication based on the at least one attribute of the first node and the at least one condition that a counter part node must meet to be able to communicate with the second node, determining if the second node is acceptable for the first node as a counter part of communication based on the at least one attribute of the second node and the at least one condition that a counter part node must meet to be able to communicate with the first node, determining the intersection between the configuration information sent from the first authentication server and the configuration information sent from the second authentication server, and/or determining a suitable configuration from the intersection as the mediation result.

In this way, a configuration is chosen that is suitable for both nodes. This means that both nodes are able to support the chosen configuration of an encrypted connection.

The mediation server may translate between the information model used to model the at least one attribute of the first node and the at least one condition that a counterpart node must meet to be able to communicate with the first node and the information model used to model the at least one attribute of the second node and the at least one condition that a counterpart node must meet to be able to communicate with the second node. The background of this functionality is that the first authentication server belongs to a first management domain and the second authentication server belongs to a second management domain. In different management domains different information models may be used. An information model is comparable to an ontology. The information model determines how attributes and conditions are expressed. The information model provides a vocabulary and concepts for expressing relevant information. A translation between the two information models may be necessary to deal with differences of the syntax or the semantics. Methods for translating between different information models are well-known from the prior art. Methods for such a translation are, for example, ontology mediation, ontology mapping, and/or schema matching.

Preferably, the mediation server retrieves on demand the at least one attribute of the first node, the at least one condition that a counterpart node must meet to be able to communicate with the second node, the at least one attribute of the second node, and/or the at least one condition that a counterpart node must meet to be able to communicate with the first node from the first and second authentication server during the step of mediating between the first authentication server and the second authentication server at the mediation server. This means that the mediation server retrieves only those parts of the information that is needed to determine a suitable mediation result. The on demand retrieval is done to prevent disclosing unnecessarily detailed information about nodes to the mediation server or/and to reduce data transmission between the authentication servers and the mediation server.

Preferably, the step of mediating between the first authentication server and the second authentication server at the mediation server further comprises the steps of generating an encryption key according to the determined configuration and adding the generated encryption key to the mediation result. The generated encryption key is a symmetric encryption key that is given to the first node and to the second node. Thus, the two nodes can use this encryption key for their encrypted communication. In comparison to asymmetric encryption methods symmetric encryption methods have the advantage that they need fewer computing cycles. This means that symmetric encryption is more efficient than asymmetric encryption.

The step of mediating between the first authentication server and the second authentication server at the mediation server may also comprise the steps of generating a seed of an encryption key according to the determined configuration and adding the generated seed of an encryption key to the mediation result. This means that instead of a complete encryption key only a seed of an encryption key is generated and added to the mediation result. Based on the seed the two nodes are able to derive the full encryption key.

Preferably, the step of distributing a mediation result from the mediation server to at least one of the first node and the second node comprises the steps of sending the mediation result from the mediation server to the first authentication server, sending the mediation result from the mediation server to the second authentication server, sending the mediation result from the first authentication server to the first node, and/or sending the mediation result from the second authentication server to the second node. This method of distribution is preferable because encrypted connections between the mediation server and the first and second authentication server already exist. Furthermore, an encrypted connection between the first authentication server and the first node already exists as well as an encrypted connection between the second authentication server and the second node. Thus, this way of distributing the mediation result reuses existing encrypted connections. As an alternative, it would be also possible that the mediation server sets up encrypted and authenticated connections between itself and the first node as well as an encrypted and authenticated connection between the mediation server and the second node. Then, the mediation result would be distributed over these connections. However, using this method entails setting up two new connections. As a further alternative, it would be possible that the mediation server issues a certificate that comprises the information that the second node can trust the first node. This certificate would be distributed to the first node. When the first node sets up the encrypted connection with the second node it sends this certificate to the second node. In this way the second node can verify the trustworthiness of the first node. In such a situation it may no longer be necessary to distribute the mediation result from the mediation server to the second node.

Preferably, the mediation result that is sent from the mediation server to the first authentication server and that is sent from the first authentication server to the first node further comprises an identifier of the second authentication server and/or an identifier of the second node.

Preferably, the mediation result sent from the mediation server to the second authentication server and sent from the second authentication server to the second node further comprises an identifier of the first authentication server and/or an identifier of the first node.

Preferably, the mediation request and/or the mediation result are recorded at the mediation server. Those records may be used to show what communication has been made between nodes.

Furthermore, the invention may comprise a system for mediation of authentication within a communication network, wherein the system comprises means for sending a request to mediate authentication between a first node and at least a second node from the first node to a mediation means, means for receiving said request by the mediation means, means for providing authentication between the mediation means and the second node, means for providing mediation of authentication between the first node and the second node, and/or means for establishing a connection between the first node and the second node.

Furthermore, the invention may comprise a system for the mediation of authentication within a communication network between at least one first node managed by at least one first authentication server and at least one second node managed by at least one second authentication server using a mediation server. The system comprises means for establishing an encrypted connection between the first node and the first authentication server, means for sending a request to establish an encrypted connection between the first node and the second node managed by the second authentication server from the first node to the first authentication server, a mediation server being able to mediate authentication between the first authentication server and the second authentication server, means, for establishing an encrypted connection between the first authentication server and the mediation server, means for sending the request to establish a connection between the first node and the second node managed by the second authentication server from the first authentication server to the mediation server, means for establishing an encrypted connection between the mediation server and the second authentication server, means for sending an authentication request from the mediation server to the second authentication server, means for sending an authentication response from the second authentication server to the mediation server, means for mediating between the first authentication server and the second authentication server at the mediation server, means for distributing a mediation result from the mediation server to the first node and to the second node, and/or means for establishing an encrypted connection between the first node and the second node.

According to the invention the first node may be constituted by a user. Also the second node may be constituted by a user.

Preferably, the first and second authentication server keep information about each node that they manage comprising at least one attribute of the managed node, and/or at least one condition that a counterpart node must meet to be able to communicate with the managed node.

Preferably, the first and second authentication server furthermore keep information about each counterpart authentication server that they have a pre-agreed relation with comprising at least one attribute of the counterpart authentication server and/or at least one condition in order to manage nodes cooperatively between the authentication servers. If the first authentication server possesses a pre-agreed relation with another authentication server where the second node is registered, no mediation server is needed. In this way, an encrypted connection between the first node and the second node can be set up more quickly. However, a large-scale system that is flexible should not rely on pre-agreed relations between authentication servers.

Preferably, the first and second authentication server keep information about at least one mediation server comprising at least one attribute of the mediation server and/or information which enables the authentication server to authenticate the mediation server.

The information which enables the authentication server to authenticate the mediation server may be a public key certificate of the mediation server.

Preferably, the mediation server keeps information about each authentication server that is registered as a target for mediation at the mediation server comprising at least one attribute of the authentication server and/or information which enables the mediation server to authenticate the authentication server.

The information which enables the mediation server to authenticate the authentication server may be a public key certificate of the authentication server.

Furthermore, the invention comprises a computer software product for the mediation of authentication within a communication network. The computer software product is adapted, when loaded into a memory and processed by a data processing means of a node and/or a server to perform the disclosed method.

Features, embodiments, and particular aspects of the invention are explained in the following with reference to the drawings.
Figure 1 shows a scenario for the mediation of authentication within a communication network.
Figure 2 shows the tables that one embodiment of an authentication server comprises.
Figure 3 shows the tables that one embodiment of a mediation server comprises.
Figure 4 shows one embodiment of a system for mediation of authentication within a communication network.
Figure 5 shows a first embodiment of the method for mediation of authentication within a communication network.
Figure 6 shows a second embodiment of the method for mediation of authentication within a communication network.

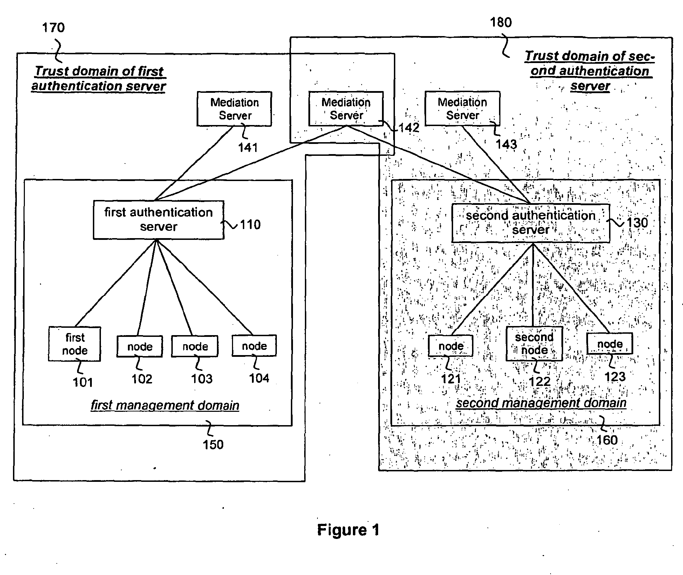

Figure 1 shows a scenario for the mediation of authentication within a communication network. The first authentication sever 110 manages several nodes 101, 102, 103, 104. The first authentication server 110 and the nodes it manages 101, 102, 103, 104 are contained within the first management domain 150. The first node 101 wants to communicate via an encrypted connection with the second node 122. However, the second node 122 is located in a second management domain 160.

The second management domain 160 comprises the second authentication server 130 and the nodes that are managed by the second authentication server 121, 122, 123. There is no pre-established mutual agreement between the first authentication server 110 and the second authentication server 130. Thus, mediation of authentication is needed.

The first authentication server 110 is registered as a target for mediation at several mediation servers 141, 142. There is trust established between the mediation servers 141, 142 and the first authentication server 110. Thus, the two mediation servers 141, 142 and the first management domain 150 collectively constitute a trust domain of the first authentication server 170. Also, the second authentication server 130 is registered as a target for mediation at various mediation servers 142, 143. There is a trust relation established between the second authentication server 130 and the mediation servers 142, 143. Thus, the two mediation servers 142, 143 and the second management domain 160 collectively constitute the trust domain of the second authentication server 180. The goal of the invention is to combine two trust domains 170, 180.

This combination of the trust domains can be reached by mediating authentication between the first authentication server 110 and the second authentication server 130. This mediation can be performed by the mediation server 142 where the first authentication server 110 is registered as a target for mediation as well as the second authentication server 130. This means that the first authentication server 110 and the second authentication server 130 have the same mediation server 142 in common. This means, both authentication servers trust the mediation server 142. This is the basic principle how mediation of authentication can be performed.

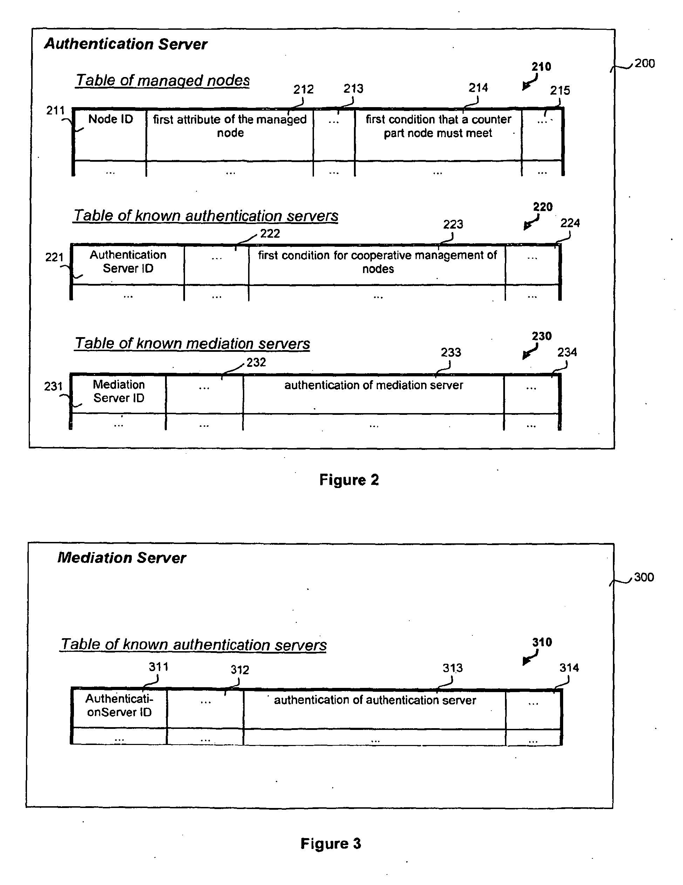

Figure 2 shows one embodiment of an authentication server 200. This embodiment of the authentication server comprises a table of managed nodes 210, a table of known authentication servers 220, and a table of known mediation servers 230.

The table of managed nodes 210 comprises several columns 211, 212, 213, 214, 215. One column 211 contains the identifier of the node (node ID). Another column 212 comprises the first attribute of the managed node. Additional columns 213 may contain further attributes of the managed node. A further column 214 comprises a first condition that a counterpart node must meet in order to communicate with the node that is represented by the node ID. Further columns 215 may contain further conditions that a counterpart node must meet.

The table of known authentication servers 220 comprises several columns. One column 221 comprises an authentication server identifier (authentication server ID). Further columns 222 may contain further attributes of the authentication server. A further column 223 comprises the first condition for cooperative management of nodes. Further columns 224 may contain further conditions for cooperative management of nodes.

The table of known mediation servers 230 comprises several columns. One column 231 contains the identifier of the mediation server (mediation server ID). Further columns 232 may comprise further attributes of the mediation server. One column comprises the authentication of the mediation server referenced by the mediation server ID. Further columns 234 may comprise further information about the mediation server.

Figure 3 shows one embodiment of a mediation server 300. The embodiment of the mediation server 300 comprises a table of known authentication servers 310. The table of known authentication servers 310 comprises several columns. One column 311 contains an identifier of the authentication server (authentication server ID). Further columns 312 may comprise further attributes of the authentication server. One column 313 comprises an authentication of the authentication server referenced by the identifier of the authentication server. Further columns 314 may comprise further information about the authentication server.

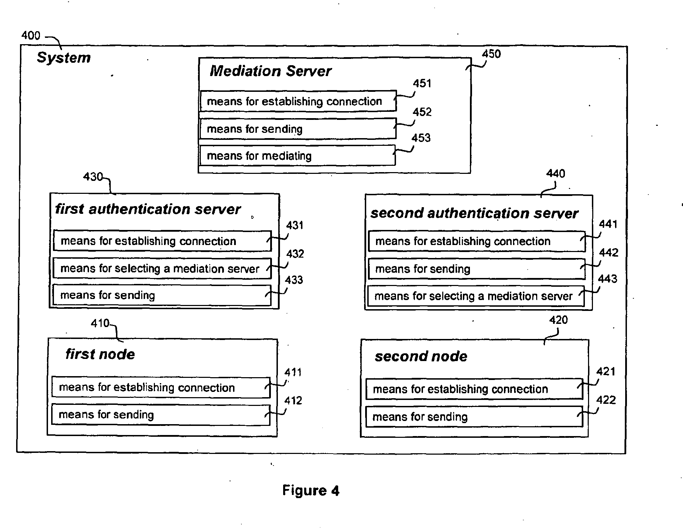

Figure 4 shows one embodiment of a system for mediation of authentication within a communication network. The embodiment of the system 400 comprises a first node 410, a second node 420, a first authentication server 430, a second authentication server 440, and a mediation server 450. The system 400 comprises a means for establishing an encrypted connection between the first node and the first authentication server 411, 431. This means comprises a means for establishing an encrypted connection 411 that is located on the first node 410 and a means for establishing an encrypted connection 431 that is located on the first authentication server 430. The first node 410 further comprises a means for sending a request 412 to establish an encrypted connection between the first node and the second node managed by the second authentication server from the first node to the first authentication server. The first authentication server 430 further comprises a means for selecting a mediation server 432 being able to mediate authentication between the first authentication server 430 and the second authentication server 440. The system 400 further comprises a means for establishing an encrypted connection between the first authentication server and the mediation server 431, 451. This means comprises a means for establishing an encrypted connection 431 that is located on the first authentication server 430 and a means for establishing an encrypted connection 451 that is located on the mediation server 450. The first authentication server 430 further comprises a means for sending the request 433 to establish a connection between the first node and the second node managed by the second authentication server from the first authentication server to the mediation server 450.

The system 400 further comprises a means for establishing an encrypted connection between the mediation server 450 and the second authentication server 440. This means comprises a means for establishing an encrypted connection 451 that is located on the mediation server 450 and a second means for establishing an encrypted connection 441 that is located on the second authentication server 440. The system 400 further comprises a means for sending an authentication request 452 from the mediation server to the second authentication server 440. The second authentication server 440 further comprises a means for sending an authentication response 442 from the second authentication server 440 to the mediation server 450. Furthermore, the second authentication server 440 comprises a means for selecting a mediation server 443. Thus, also the second authentication server can select a mediation server if the second node wants to establish an authenticated and encrypted connection with a node that is managed by a different authentication server. The mediation server 450 further comprises a means for mediating 453 between the first authentication server and the second authentication server at the mediation server 450.

The system 400 further comprises a means for distributing 433, 442, 452 a mediation result from the mediation server 450 to the first node 410 and to the second node 420. This means comprises a means for sending 452 located on the mediation server 450, a means for sending 433 located on the first authentication server 430, and a means for sending 442 located on the second authentication server 440. The system 400 further comprises a means for establishing an encrypted connection between the first node and the second node. This means comprises a means for establishing an encrypted connection 411 that is located on the first node 410 and a means for establishing an encrypted connection 421 that is located on the second node 420. Additionally, the second node 420 comprises also a means for sending 422.

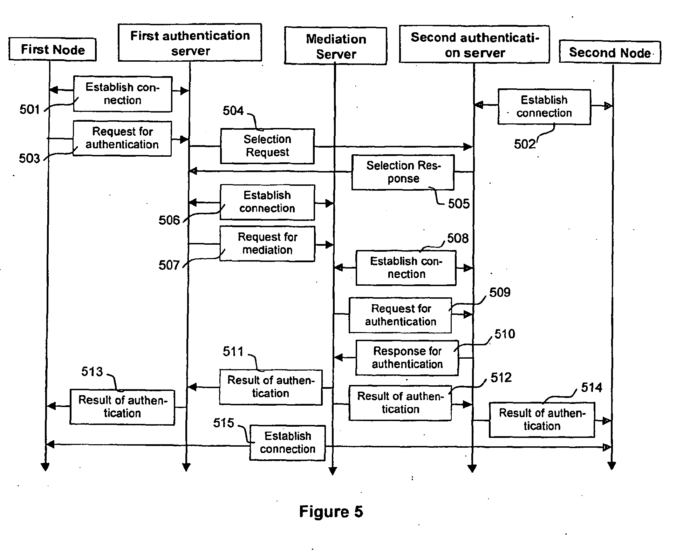

Fig. 5 shows one embodiment of the method for mediation of authentication within a communication network. In step 501 the first node authenticates itself at the first authentication server and the first authentication server authenticates itself at the first node. Afterwards, the first node and the first authentication server establish an encrypted connection for communication between them. For the authentication and the establishing of an encrypted connection the method disclosed in US 2005/0226424 A1 can be used. However, the invention is not restricted to using this method. Any other method for authenticating two parties and for establishing an encrypted connection can be used. In step 502 the second node authenticates itself at the second authentication server and the second authentication server authenticates itself at the second node. Afterwards, the second authentication server and the second node establish an encrypted connection between them. In step 503 the first node sends a request to establish an encrypted connection between the first node and the second node managed by the second authentication server from the first node to the first authentication server. This request comprises an identifier of the second node, an identifier of the second authentication server, and configuration information for an encrypted connection between the first node and the second node.

The first authentication server receives the request from the first node. There may be three cases:
1. The first case is that the second node is also managed by the first authentication server.
2. The second case is that the second node is managed by the second authentication server and the first authentication server possesses a pre-established mutual agreement with the second authentication server.
3. The third case is that the second node is managed by the second authentication server and the first authentication server does not possess a pre-established mutual agreement with the second authentication server. This is the case in the embodiment of the method for mediation of authentication that is shown in Fig. 5. In this case the first authentication server needs to select an appropriate mediation server. This selection is accomplished in the current embodiment as follows:

In step 504 the first authentication server sends a selection request to the second authentication server. This selection request comprises a list of at least one mediation server where the first authentication server is registered as a target for mediation. When the second authentication server receives the selection request message, it selects a mediation server from the list where also the second authentication server is registered as a target for mediation. In step 505 the second authentication server sends a selection response to the first authentication server. This selection response message comprises an identifier of the selected mediation server. Here, it is assumed that this selection process is done by just one round trip of messages. It is also conceivable that the selection process is done in a more complex selection process. In this case more than two messages would be exchanged between the first authentication server and the second authentication server. It is also possible that the first authentication server adds priorities to the list of mediation servers where the first authentication server is registered as a target for mediation. This means that the list of mediation servers is sorted. Mediation servers with a high rank in the list are very preferable from the point of view of the first authentication server. Mediation servers with a low rank in the list are still possible to use, but they are not preferable from the point of view of the first authentication server. The second authentication server would then choose a mediation server from the list under consideration of the priorities of the first authentication server and under consideration of the priorities of the second authentication server.

In step 506 the first authentication server authenticates itself at the selected mediation server and the selected mediation server authenticates itself at the first authentication server. Afterwards, the first authentication server and the mediation server establish an encrypted connection between them. In step 507 the first authentication server sends a request for mediation to the mediation server. This request comprises an identifier of the second node, an identifier of the second authentication server that manages the second node, an identifier of the first node, attributes of the first node, conditions that a counter part node must meet to be able to communicate with the first node, and configuration information for an encrypted connection between the first node and the second node. When the selected mediation server receives the request for mediation, the mediation server checks whether the second authentication server is registered as a target for mediation at the mediation server. This is necessary for the mediation server to be able to serve mediation services. If the second authentication server is registered as a target for mediation at the selected mediation server the selected mediation server authenticates itself at the second authentication server and the second authentication server authenticates itself at the mediation server. Afterwards, the mediation server and the second authentication server establish an encrypted connection between each other (step 508).

In step 509 the selected mediation server sends a request for authentication to the second authentication server. This request for authentication comprises an identifier of the second node. When the second authentication server receives the request for authentication, it checks whether the second node is one of the nodes that the second authentication server manages. This is accomplished by checking the table of managed nodes that is stored on the second authentication server. If the second node is managed by the second authentication server, the second authentication server sends a response for authentication to the selected mediation server in step 510. This response for authentication comprises attributes of the second node, information about conditions that a counterpart node must meet to be able to communicate with the second node, and configuration information for an encrypted connection with this second node. When the selected mediation server receives the response for authentication, the mediation server authenticates both nodes. Furthermore, it mediates between the first authentication server and the second authentication server. This mediation is done by performing the following steps:

First, it is determined if the first node is acceptable for the second node as a counter part of communication based on the at least one attribute of the first node and the at least one condition that a counter part node must meet to be able to communicate with the second node. In a second step, it is determined if the second node is acceptable for the first node as a counter part of communication based on the at least one attribute of the second node and the at least one condition that a counter part node must meet to be able to communicate with the first node. In a third step, the intersection between the configuration information sent from the first authentication server and the configuration information sent from the second authentication server is determined. From this intersection a suitable configuration is determined as the mediation result.

This means that the mediation server does the following: It finds out what the requirements are when a node wants to communicate with the first node. And it checks whether the second node can meet these requirements. Then it finds out what the requirements are when a node wants to communicate with the second node and checks whether the first node can meet these requirements. Then the mediation server chooses the configuration for the encrypted connection between the first node and the second node in such a way that both nodes are able to take part in the encrypted communication and in such a way that the requirements of both nodes are met. The chosen configuration is the mediation result.

During this mediation process it might happen that the first authentication server and the first node express their attributes, their conditions, their requirements and other information in an information model that is different from the information model that is used by the second node and by the second authentication server. This means that the requirements of the node in the first management domain are not directly comparable to the attributes of the second node. Thus, a translation is needed. The mediation server is able to translate from one information model to the other information model. In this way it is accomplished that the mediation server can mediate authentication between two management domains that do not use the same information model. This translation of the syntax or semantics of information can be performed, for example, by ontology mediation, ontology mapping, and/or schema matching. These methods are well known from the prior art.

During the mediation process it is also possible that attributes of the nodes and conditions that a counter part node must meet to be able to communicate with the node are retrieved on demand. This means that the mediation server requests information only when it is really needed for the decision which configuration should be chosen. This retrieval on demand is beneficial because it prevents disclosing unnecessarily detailed information. In this way data transmission is reduced.

The selected configuration chosen by the mediation server determines for example which encryption algorithm should be used between the first node and the second node and how long the encryption key should be. After a configuration has been chosen the mediation server generates an encryption key according to the configuration. Instead of generating an encryption key the mediation server may also generate a seed of an encryption key. Based on the seed, the first node and the second node are able to derive the encryption key. This means that both the first node and the second node know a general method how an encryption key can be generated based on a seed of an encryption key. The generated encryption key or the seed of the encryption key is added to the mediation result.

Then the mediation server distributes the mediation result that also comprises the encryption key or the seed of the encryption key. In step 511 the selected mediation server sends a result of authentication to the first authentication server. This result of authentication comprises an identifier of the second node, an identifier of the second authentication server, and the mediation result which comprises a configuration for an encrypted connection between the first node and the second node and a generated key or the seed of an encryption key. In step 512 the mediation server sends another result of authentication to the second authentication server. This result of authentication comprises an identifier of the first node, an identifier of the first authentication server, and the mediation result comprising a configuration for an encrypted connection between the first node and the second node and a generated key or a seed of a key. In step 513 the first authentication server forwards the result of authentication that it received from the selected mediation server in step 511 to the first node. In step 514 the second authentication server forwards the result of authentication that it received in step 512 from the mediation server to the second node. At this point both the first node and the second node have received the mediation results and an identifier of the counter part authentication server and the counter part node. In step 515 the first node and the second node establish an encrypted connection between them using the identifier of the counter part node of the communication, the identifier of the counter part authentication server, the selected configuration for an encrypted connection, and the generated encryption key or the generated seed of an encryption key.

A person skilled in the art can easily see that the steps 504 and 505 can be replaced when the first authentication server had earlier interactions with the second authentication server. This means that the first authentication server already holds a selection of a mediation server made by the second authentication server in its cache that states which mediation server can be used to mediate authentication between the first authentication server and the second authentication server. This cached information can be reused to select a mediation server.

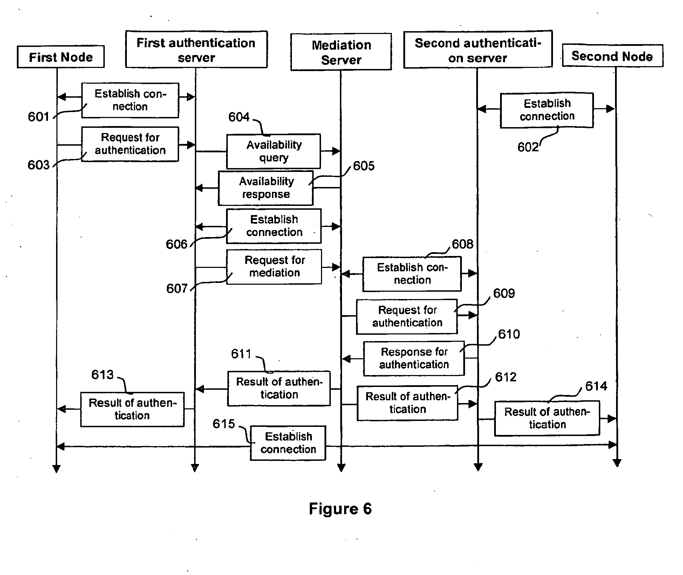

Fig. 6 shows another embodiment of the method for mediation of authentication within a communication network. In step 601 the first node authenticates itself at the first authentication server, the first authentication server authenticates itself at the first node, and both nodes establish an encrypted connection between them. In step 602 the second node authenticates itself at the second authentication server, the second authentication server authenticates itself at the second node, and the second node and the second authentication server establish an encrypted connection between each other. In step 603 the first node sends a request for authentication to the first authentication server. The request for authentication comprises at least an identifier of the second node, an identifier of the second authentication server, and configuration information for the requested encrypted connection between the first node and the second node.

When the first authentication server receives the request for authentication, it tries to find a mediation server that can mediate authentication between the first authentication server and the second authentication server. Thus, in step 604 the first authentication server sends an availability query to at least one mediation server. This sending of the availability query to at least one mediation server can be performed using unicasting, broadcasting, multicasting, or any other method of sending messages within a communication network. Especially, using application layer multicasting based on a peer-to-peer substrate would be preferable. The availability query comprises at least an identifier of the second node and an identifier of the second authentication server. The availability query asks the mediation server as to whether it is possible to mediate the authentication between the second authentication server and the first authentication server. When the availability query is received by a mediation server that is able to mediate authentication between the first authentication server and the second authentication server, it sends an availability response to the first authentication server in step 605. This availability response comprises at least an identifier of the mediation server sending this availability response. This means that the mediation server states to the first authentication server that it is able and willing to mediate authentication between the second authentication server and the first authentication server. Thus, the first authentication server receives in the case where a suitable mediation server can be found at least one availability response. The first authentication server selects a mediation server from the one received availability responses or the numerous received availability responses.

In step 606 the first authentication server authenticates itself at the selected mediation server and the selected mediation server authenticates itself at the first authentication server. Afterwards, the first authentication server and the mediation server establish an encrypted connection. In step 607 the first authentication server sends a request for mediation to the mediation server. In step 608 the selected mediation server authenticates itself at the second authentication server and the second authentication server authenticates itself at the mediation server. Afterwards, the mediation server and the second authentication server establish an encrypted connection between each other. In step 609 the mediation server sends a request for authentication to the second authentication server. If the second authentication server manages the second node, it sends a response for authentication in step 610. After having received the response for authentication the mediation server mediates between the first authentication server and the second authentication server. The mediation server selects a suitable configuration for an encrypted connection between the first node and the second node. Based on this configuration the mediation server generates an encryption key or a seed of an encryption key. The mediation result comprising at least the selected configuration for an encrypted connection between the first node and the second node and an encryption key or a seed of an encryption key is distributed to the first node and the second node. In step 611 the mediation result, an identifier of the second authentication server, and an identifier of the second node is sent to the first authentication server from the mediation server. In step 612 the mediation server sends the mediation result, an identifier of the first authentication server, and an identifier of the first node to the second authentication server. In step 613 the first authentication server forwards the information that it received in step 611 from the mediation server to the first node. In step 614 the second authentication server sends the information that it received in step 612 from the mediation server to the second node. In step 615 the first node and the second node establish an encrypted connection between them using the identifier of the counter part node, the identifier of the counter part authentication server, the configuration for an encrypted connection, and the generated encryption key or the seed of the generated encryption key.

Summarizing the above, the method for mediation of authentication within a communication network according to the invention allows to establish an authenticated and encrypted connection between a first node and a second node even when the first node and the second node are managed by different authentication servers that belong to different management domains. Even if the first authentication server and the second authentication server do not have any pre-established mutual agreement between each other, they are capable of interacting with each other in an authenticated way. The necessary authentication to establish a trust relationship is mediated by the mediation server.

The specifications and drawings are to be regarded in an illustrative rather than a restrictive sense. It is evident that various modifications and changes may be made thereto without departing from the spirit and scope of the invention as set forth in the claims.

While the invention has been described with reference to different embodiments above, this description shall not limit the disclosure or features and aspects of the present invention. In this regard, as far as modifications are readily apparent for an expert skilled in the art they shall be included by the above description of embodiments implicitly. For example, while the content of the exchanged messages has been described, it may also be possible to use the method according to the invention by exchanging messages with different contents. Furthermore, the order of the exchanged messages may be different. It is also possible that for the mediation process different information is used to find a suitable match between the first node and the second node.

## Claims

1. Method for mediation of authentication within a communication network, wherein the method comprises the steps of sending a request to mediate authentication between a first node (101; 410) and at least a second node (122; 420) from the first node to a mediation server (142; 450) with the steps of
- authenticating the first node (101; 410) at a first authentication server (110; 430) that manages the first node,
- authenticating the first authentication server (110; 430) at the first node (101; 410),
- establishing an encrypted connection (501; 601) between the first node (101; 410) and the first authentication server (110; 430),
- sending the request (503; 603) to mediate authentication between the first node (101; 410) and the second node (122; 420) from the first node (101; 410) to the first authentication server (110; 430),
- providing (504, 505; 604, 605) the mediation server (142; 450) being able to mediate authentication between the first node (101; 410) and the second node (122; 420),
- authenticating the first authentication server (110; 430) at the mediation server (142; 450),
- authenticating the mediation server (142; 450) at the first authentication server (110; 430),
- establishing an encrypted connection (506; 606) between the first authentication server (110; 430) and the mediation server (142; 450), and
- sending the request (503; 603) to mediate authentication between the first node (101; 410) and the second node (122; 420) from the first authentication server (110; 430) to the meditation server (142; 450);
- receiving said request by the mediation server (142; 450);
- providing authentication between the mediation server (142; 450) and the second node (122; 420) with the steps of
- sending an authentication request (509; 609) from the mediation server (142; 450) to a second authentication server (130; 440) that manages the second node and
- sending an authentication response (510; 610) from the second authentication server (130; 440) to the mediation server (142; 450);
- providing mediation of authentication between the first node (101; 410) and the second node (122; 420); and
- establishing a connection between the first node (101; 410) and the second node (122; 420),

2. Method according to claim 1, wherein the request (503; 603) to mediate authentication between the first node (101; 410) and the second node (122; 420) comprises
- an identifier of the second node (122; 420),
- an identifier of the second authentication server (130; 440), and
- configuration information for a connection between the first node (101; 410) and the second node (122; 420).

3. Method according to at least one of the preceding claims, wherein the step of providing (504, 505; 604, 605) the mediation server (142; 450) comprises the steps of
- sending a list of at least one mediation server (142; 450) where the first authentication server (110; 430) is registered as a target for mediation from the first authentication server (110; 430) to the second authentication server (130; 440),
- selecting a mediation server (142; 450) where also the second authentication server (130; 440) is registered as a target for mediation from the list at the second authentication server (130; 440),
- sending an identifier of the selected mediation server (142; 450) from the second authentication server (130; 440) to the first authentication server (110; 430).

4. Method according to claim 3, wherein the list of mediation servers is ordered according to a priority of the mediation servers.

5. Method according to at least one of the preceding claims, wherein the step of providing (504, 505; 604, 605) the mediation server (142; 450) comprises sending several messages between the first authentication server (110; 430) and the second authentication server (130; 440).

6. Method according to at least one of the preceding claims, wherein the step of providing (504, 505; 604, 605) the mediation server (142; 450) is performed by using information about previous selections of mediation server that is stored on the first authentication server (110; 430),

7. Method according to at least one of the preceding claims, wherein the first authentication server (110; 430) provides the mediation server (142; 450) by sending a request as to whether the mediation server (142; 450) can mediate the second authentication server (130; 440) to each mediation server (142; 450) using unicasting.

8. Method according to at least one of the preceding claims, wherein the first authentication server (110; 430) provides a mediation server (142; 450) by sending a request as to whether the mediation server (142; 450) can mediate the second authentication server (130; 440), to each mediation server (142; 450) using broadcasting.

9. Method according to at least one of the preceding claims, wherein the first authentication server (110; 430) provides a mediation server (142; 450) by sending a request as to whether the mediation server (142; 450) can mediate the second authentication server (130; 440), to each mediation server (142; 450) using multicasting.

10. Method according to at least one of the preceding claims, wherein the request (503; 603) to mediate authentication between the first node (101; 410) and the second node (122; 420) from the first authentication server (110; 430) to the mediation server (142; 450) further comprises
- an identifier of the first node (101; 410),
- at least one attribute of the first node (101; 410),
- at least one condition that a counter part node must meet to be able to communicate with the first node (101; 410).

11. Method according to at least one of the preceding claims, wherein the authentication request comprises an identifier of the second node (122; 420).

12. Method according to at least one of the preceding claims, wherein the authentication response comprises
- at least one attribute of the second node (122; 420),
- at least one condition that a counter part node must meet to be able to communicate with the second node (122; 420), and
- configuration information for a connection with the second node (122; 420).

13. Method according to at least one of the preceding claims, wherein the step of providing mediation of authentication between the first node (101; 410) and the second node (122; 420) comprises the steps of
- determining if the first node (101; 410) is acceptable for the second node (122; 420) as a counter part of communication based on the at least one attribute of the first node (101; 410) and the at least one condition that a counter part node must meet to be able to communicate with the second node (122; 420),
- determining if the second node (122; 420) is acceptable for the first node (101; 410) as a counter part of communication based on the at least one attribute of the second node (122; 420) and the at least one condition that a counter part node must meet to be able to communicate with the first node (101; 410),
- determining the intersection between the configuration information sent from the first authentication server and the configuration information sent from the second authentication server, and
- determining a suitable configuration from the intersection as the mediation result.

14. Method according to claim 13, wherein the mediation server (142; 450) translates between the information model used to model the at least one attribute of the first node (101; 410) and the at least one condition that a counter part node must meet to be able to communicate with the first node (101; 410) and the information model used to model the at least one attribute of the second node (122; 420) and the at least one condition that a counter part node must meet to be able to communicate with the second node (122; 420).

15. Method according to claim 13 and/or claim 14, wherein the mediation server (142; 450) retrieves on demand the at least one attribute of the first node (101; 410), the at least one condition that a counter part node must meet to be able to communicate with the second node (122; 420), the at least one attribute of the second node (122; 420), and the at least one condition that a counter part node must meet to be able to communicate with the first node (101; 410) from the first and second authentication server (130; 440) during the step of providing mediation of authentication between the first node (101; 410) and the second node (122; 420).

16. Method according to at least one of the preceding claims, wherein the step of providing mediation of authentication between the first node (101; 410) and the second node (122; 420) further comprises the steps of
- generating an encryption key according to the determined configuration, and
- adding the generated encryption key to the mediation result.

17. Method according to at least one of the preceding claims 1 to 15, wherein the step of providing mediation of authentication between the first node (101; 410) and the second node (122; 420) further comprises the steps of
- generating a seed of an encryption key according to the determined configuration, and
- adding the generated seed of an encryption key to the mediation result.

18. Method according to at least one of the preceding claims, wherein the step of providing mediation of authentication between the first node (101; 410) and the second node (122; 420) comprises the step of distributing (511, 512, 513, 514; 611, 612, 613, 614) a mediation result form the mediation server (142; 450) to at least one of the first node (101; 410) and the second node (122; 420).

19. Method according to claim 18, wherein the step of distributing (511, 512, 513, 514; 611, 612, 613, 614) a mediation result form the mediation server (142; 450) to at least one of the first node (101; 410) and the second node (122; 420) comprises the steps of
- sending the mediation result from the mediation server (142; 450) to the first authentication server (110; 430),
- sending the mediation result from the mediation server (142; 450) to the second authentication server (130; 440),
- sending the mediation result from the first authentication server (110; 430) to the first node (101; 410),
- sending the mediation result from the second authentication server (130; 440) to the second node (122; 420).

20. Method according to at least one of the preceding claims, wherein the mediation result sent from the mediation server (142; 450) to the first authentication server (110; 430) and sent from the first authentication server (110; 430) to the first node (101; 410) further comprises
- an identifier of the second authentication server (130; 440) and
- an identifier of the second node (122; 420).

21. Method according to at least one of the preceding claims, wherein the mediation result sent from the mediation server (142; 450) to the second authentication server (130; 440) and sent from the second authentication server (130; 440) to the second node (122; 420) further comprises
- an identifier of the first authentication server (110; 430) and
- an identifier of the first node (101; 410).

22. Method according to at least one of the preceding claims, wherein the request (503; 603) to mediate authentication between the first node (101; 410) and the second node (122; 420) and/or the mediation result are recorded at the mediation server (142; 450).

23. System for mediation of authentication within a communication network, wherein the system comprises
- means for sending a request to mediate authentication between a first node (101; 410) and at least a second node (122; 420) from the first node to a mediation server (142; 450) with
- means for authenticating the first node (101; 410) at a first authentication server (110; 430) that manages the first node,
- means for authenticating the first authentication server (110; 430) at the first node (101; 410),
- means for establishing an encrypted connection (501; 601) between the first node (101; 410) and the first authentication server (110; 430),
- means for sending the request (503; 603) to mediate authentication between the first node (101; 410) and the second node (122; 420) from the first node (101; 410) to the first authentication server (110; 430),
- the mediation server (142; 450) being able to mediate authentication between the first node (101; 410) and the second node (122; 420),
- means for authenticating the first authentication server (110; 430) at the mediation server (142; 450),
- means for authenticating the mediation server (142; 450) at the first authentication server (110; 430),
- means for establishing an encrypted connection (506; 606) between the first authentication server (110; 430) and the mediation server (142; 450), and
- means for sending the request (503; 603) to mediate authentication between the first node (101; 410) and the second node (122; 420) from the first authentication server (110; 430) to the mediation server (142; 450);
- means for receiving said request by the mediation server (142; 450);
- means for providing authentication between the mediation server (142; 450) and the second node (122; 420) with
- means for sending an authentication request (509; 609) from the mediation server (142; 450) to a second authentication server (130; 440) that manages the second node and
- means for sending an authentication response (510; 610) from the second authentication server (130; 440) to the mediation server (142; 450);
- means for providing mediation of authentication between the first node (101; 410) and the second node (122; 420); and
- means for establishing a connection between the first node (101; 410) and the second node (122; 420).

24. System according to claim 23, wherein the first node (101; 410) is constituted by a user.

25. System according to at least one of the claims 23 to 24, wherein the second node (122; 420) is constituted by a user.

26. System according to at least one of the claims 23 to 25, wherein the first and second authentication server (130; 440) keep information about each node that they manage comprising
- at least one attribute of the managed node, and/or
- at least one condition that a counter part node must meet to be able to communicate with the managed node.

27. System according to at least one of the claims 23 to 26, wherein the first and second authentication server (130; 440) keep information about each counter part authentication server that they have a pre-agreed relation with comprising
- at least one attribute of the counter part authentication server, and/or
- at least one condition in order to manage nodes cooperatively between the authentication servers.

28. System according to at least one of the claims 23 to 27, wherein the first and second authentication server (130; 440) keep information about at least one mediation server (142; 450) comprising
- at least one attribute of the mediation server (142; 450), and/or
- information which enables the authentication server to authenticate the mediation server (142; 450).

29. System according to claim 28, wherein the information which enables the authentication server to authenticate the mediation server (142; 450) is a public key certificate of the mediation server (142; 450).

30. System according to at least one of the claims 23 to 29, wherein the mediation server (142; 450) keeps information about each authentication server that is registered as a target for mediation at the mediation server (142; 450) comprising
- at least one attribute of the authentication server, and/or
- information which enables the mediation server (142; 450) to authenticate the authentication server.

31. System according to claim 30, wherein the information which enables the mediation server (142; 450) to authenticate the authentication server is a public key certificate of the authentication server.

32. Computer software product for the mediation of authentication within a communication network, the computer software product being adapted, when loaded into a memory and processed by a data processing means of a node and/or a server to perform a method according to at least one of the claims 1 to 22.

## Patentansprüche

1. Verfahren zur Vermittlung einer Authentifizierung in einem Kommunikationsnetz, wobei das Verfahren die folgenden Schritte umfasst:
Senden einer Anfrage zur Vermittlung einer Authentifizierung zwischen einem ersten Knoten (101; 410) und zumindest einem zweiten Knoten (122; 420) von dem ersten Knoten an einen Vermittlungsserver (142; 450) mit den Schritten:
- Authentifizieren des ersten Knotens (101; 410) an einem ersten Authentifizierungsserver (110; 430), der den ersten Knoten verwaltet,
- Authentifizieren des ersten Authentifizierungsservers (110; 430) an dem ersten Knoten (101; 410),
- Einrichten einer verschlüsselten Verbindung (501; 601) zwischen dem ersten Knoten (101; 410) und dem ersten Authentifizierungsserver (110; 430),
- Senden der Anfrage (503; 603) zur Vermittlung der Authentifizierung zwischen dem ersten Knoten (101; 410) und dem zweiten Knoten (122; 420) von dem ersten Knoten (101; 410) an den ersten Authentifizierungsserver (110; 430),
- Bereitstellen (504, 505; 604, 605) des Vermittlungsservers (142; 450), der imstande ist, eine Authentifizierung zwischen dem ersten Knoten (101; 410) und dem zweiten Knoten (122; 420) zu vermitteln,
- Authentifizieren des ersten Authentifizierungsservers (110; 430) an dem Vermittlungsserver (142; 450),
- Authentifizieren des Vermittlungsservers (142; 450) an dem ersten Authentifizierungsserver (110; 430),
- Einrichten einer verschlüsselten Verbindung (506; 606) zwischen dem ersten Authentifizierungsserver (110; 430) und dem Vermittlungsserver (142; 450), und
- Senden der Anfrage (503; 603) zur Vermittlung der Authentifizierung zwischen dem ersten Knoten (101; 410) und dem zweiten Knoten (122; 420) von dem ersten Authentifizierungsserver (110; 430) an den Vermittlungsserver (142; 450);
- Empfangen der Anfrage durch den Vermittlungsserver (142; 450);
- Vorsehen einer Authentifizierung zwischen dem Vermittlungsserver (142; 450) und dem zweiten Knoten (122; 420) mit den Schritten
- Senden einer Authentifizierungsanfrage (509; 609) von dem Vermittlungsserver (142; 450) an einen zweiten Authentifizierungsserver (130; 440), der den zweiten Knoten verwaltet, und
- Senden einer Authentifizierungsantwort (510; 610) von dem zweiten Authentifizierungsserver (130; 440) an den Vermittlungsserver (142; 450);
- Vorsehen einer Vermittlung zur Authentifizierung zwischen dem ersten Knoten (101; 410) und dem zweiten Knoten (122; 420); und
- Einrichten einer Verbindung zwischen dem ersten Knoten (101; 410) und dem zweiten Knoten (122; 420).

2. Verfahren nach Anspruch 1, wobei die Anfrage (503; 603) zur Vermittlung einer Authentifizierung zwischen dem ersten Knoten (101; 410) und dem zweiten Knoten (122; 420) Folgendes umfasst:
- einen Identifizierer des zweiten Knotens (122; 420),
- einen Identifizierer des zweiten Authentifizierungsservers (130; 440), und
- Konfigurationsinformation für eine Verbindung zwischen dem ersten Knoten (101; 410) und dem zweiten Knoten (122; 420).

3. Verfahren nach zumindest einem der vorhergehenden Ansprüche, wobei der Schritt des Bereitstellens (504, 505; 604, 605) des Vermittlungsservers (142; 450) die folgenden Schritte umfasst:
- Senden einer Liste zumindest eines Vermittlungsservers (142; 450), in der der erste Authentifizierungsserver (110; 430) als Ziel für eine Vermittlung von dem ersten Authentifizierungsserver (110; 430) an den zweiten Authentifizierungsserver (130; 440) eingetragen ist,
- Auswählen eines Vermittlungsservers (142; 450), wo auch der zweite Authentifizierungsserver (130; 440) als ein Ziel für eine Vermittlung von der Liste an dem zweiten Authentifizierungsserver (130; 440) eingetragen ist,
- Senden eines Identifizierers des ausgewählten Vermittlungsservers (142; 450) von dem zweiten Authentifizierungsserver (130; 440) zu dem ersten Authentifizierungsserver (110; 430).

4. Verfahren nach Anspruch 3, wobei die Liste von Vermittlungsservern nach Maßgabe einer Priorität der Vermittlungsserver geordnet ist.

5. Verfahren nach zumindest einem der vorhergehenden Ansprüche, wobei der Schritt des Bereitstellens (504, 505; 604, 605) des Vermittlungsservers (142; 450) das Senden mehrerer Nachrichten zwischen dem ersten Authentifizierungsserver (110; 430) und dem zweiten Authentifizierungsserver (130; 440) umfasst.

6. Verfahren nach zumindest einem der vorhergehenden Ansprüche, wobei der Schritt des Bereitstellens (504, 505; 604, 605) des Vermittlungsservers (142; 450) durch Verwenden von Information über vorherige Selektionen des Vermittlungsservers, die in dem ersten Authentifizierungsserver (110; 430) gespeichert ist, durchgeführt wird.

7. Verfahren nach zumindest einem der vorhergehenden Ansprüche, wobei der erste Authentifizierungsserver (110; 430) den Vermittlungsserver (142; 450) bereitstellt, indem er eine Anfrage, ob der Vermittlungsserver (142; 450) den zweiten Authentifizierungsserver (130; 440) vermitteln kann, an jeden Vermittlungsserver (142; 450) unter Anwendung von Unicasting sendet.

8. Verfahren nach zumindest einem der vorhergehenden Ansprüche, wobei der erste Authentifizierungsserver (110; 430) einen Vermittlungsserver (142; 450) bereitstellt, indem er eine Anfrage, ob der Vermittlungsserver (142; 450) den zweiten Authentifizierungsserver (130; 440) vermitteln kann, an jeden Vermittlungsserver (142; 450) unter Anwendung von Broadcasting sendet.

9. Verfahren nach zumindest einem der vorhergehenden Ansprüche, wobei der erste Authentifizierungsserver (110; 430) einen Vermittlungsserver (142; 450) bereitstellt, indem er eine Anfrage, ob der Vermittlungsserver (142; 450) den zweiten Authentifizierungsserver (130; 440) vermitteln kann, an jeden Vermittlungsserver (142; 450) unter Anwendung von Multicasting sendet.

10. Verfahren nach zumindest einem der vorhergehenden Ansprüche, wobei die Anfrage (503; 603) zur Vermittlung einer Authentifizierung zwischen dem ersten Knoten (101; 410) und dem zweiten Knoten (122; 420) von dem ersten Authentifizierungsserver (110; 430) an den Vermittlungsserver (142, 450) weiterhin Folgendes umfasst:
- einen Identifizierer des ersten Knotens (101; 410),
- zumindest ein Attribut des ersten Knotens (101; 410),
- zumindest eine Bedingung, die ein Gegenstückknoten erfüllen muss, um imstande zu sein, mit dem ersten Knoten (101; 410) zu kommunizieren.

11. Verfahren nach zumindest einem der vorhergehenden Ansprüche, wobei die Authentifizierungsanfrage einen Identifizierer des zweiten Knotens (122; 420) umfasst.

12. Verfahren nach zumindest einem der vorhergehenden Ansprüche, wobei die Authentifizierungsantwort Folgendes umfasst:
- zumindest ein Attribut des zweiten Knotens (122; 420),
- zumindest eine Bedingung, die ein Gegenstückknoten erfüllen muss, um imstande zu sein, mit dem zweiten Knoten (122; 420) zu kommunizieren, und
- Konfigurationsinformation für eine Verbindung mit dem zweiten Knoten (122; 420).

13. Verfahren nach zumindest einem der vorhergehenden Ansprüche, wobei der Schritt des Bereitstellens einer Vermittlung zur Authentifizierung zwischen dem ersten Knoten (101; 410) und dem zweiten Knoten (122; 420) die folgenden Schritte umfasst:
- Bestimmen, ob der erste Knoten (101; 410) für den zweiten Knoten (122; 420) als Gegenstück der Kommunikation annehmbar ist, auf der Grundlage des zumindest einen Attributs des ersten Knotens (101; 410) und der zumindest einen Bedingung, die ein Gegenstückknoten erfüllen muss, um imstande zu sein, mit dem zweiten Knoten (122; 420) zu kommunizieren,
- Bestimmen, ob der zweite Knoten (122; 420) für den ersten Knoten (101; 410) als ein Gegenstück der Kommunikation annehmbar ist, auf der Grundlage des zumindest einen Attributs des zweiten Knotens (122; 420) und der zumindest einen Bedingung, die ein Gegenstückknoten erfüllen muss, um imstande zu sein, mit dem ersten Knoten (101; 410) zu kommunizieren,
- Bestimmen der Überschneidung zwischen der von dem ersten Authentifizierungsserver gesendete Konfigurationsinformation und der von dem zweiten Authentifizierungsserver gesendeten Konfigurationsinformation, und
- Bestimmen einer geeigneten Konfiguration aus der Überschneidung als Vermittlungsergebnis.

14. Verfahren nach Anspruch 13, wobei der Vermittlungsserver (142; 450) zwischen dem Informationsmodell, das zum Darstellen des zumindest einen Attributs des ersten Knotens (101; 410) und der zumindest einen Bedingung, die ein Gegenstückknoten erfüllen muss, um imstande zu sein, mit dem ersten Knoten (101; 410) zu kommunizieren, verwendet wird, und dem Informationsmodell, das zum Darstellen des zumindest einen Attributs des zweiten Knotens (122; 420) und der zumindest einen Bedingung, die ein Gegenstückknoten erfüllen muss, um imstande zu sein, mit dem zweiten Knoten (122; 420) zu kommunizieren, übersetzt.

15. Verfahren nach Anspruch 13 und/oder Anspruch 14, wobei der Vermittlungsserver (142; 450) auf Verlangen das zumindest eine Attribut des ersten Knotens (101; 410), die zumindest eine Bedingung, die ein Gegenstückknoten erfüllen muss, um imstande zu sein, mit dem zweiten Knoten (122; 420) zu kommunizieren, das zumindest eine Attribut des zweiten Knotens (122; 420) und die zumindest eine Bedingung, die ein Gegenstückknoten erfüllen muss, um imstande zu sein, mit dem ersten Knoten (101; 410) zu kommunizieren, aus dem ersten und zweiten Authentifizierungsserver (130; 440) während des Schritts des Bereitstellens einer Vermittlung zur Authentifizierung zwischen dem ersten Knoten (101; 410) und dem zweiten Knoten (122; 420) abruft.

16. Verfahren nach zumindest einem der vorhergehenden Ansprüche, wobei der Schritt des Bereitstellens einer Vermittlung zur Authentifizierung zwischen dem ersten Knoten (101; 410) und dem zweiten Knoten (122; 420) weiterhin die folgenden Schritte umfasst:
- Erzeugen eines Chiffrierschlüssels nach Maßgabe der bestimmten Konfiguration, und
- Addieren des erzeugten Chiffrierschlüssels zu dem Vermittlungsergebnis.

17. Verfahren nach zumindest einem der vorhergehenden Ansprüche 1 bis 15, wobei der Schritt des Bereitstellens einer Vermittlung zur Authentifizierung zwischen dem ersten Knoten (101; 410) und dem zweiten Knoten (122; 420) weiterhin die folgenden Schritte umfasst:
- Erzeugen eines Startwerts eines Chiffrierschlüssels nach Maßgabe der bestimmten Konfiguration, und
- Addieren des erzeugten Startwerts eines Chiffrierschlüssels zu dem Vermittlungsergebnis.

18. Verfahren nach zumindest einem der vorhergehenden Ansprüche, wobei der Schritt des Bereitstellens einer Vermittlung zur Authentifizierung zwischen dem ersten Knoten (101; 410) und dem zweiten Knoten (122; 420) den Schritt des Verteilens (511, 512, 513, 514; 611, 612, 613, 614) eines Vermittlungsergebnisses von dem Vermittlungsserver (142; 450) an zumindest einen von dem ersten Knoten (101; 410) und dem zweiten Knoten (122; 420) umfasst.

19. Verfahren nach Anspruch 18, wobei der Schritt des Verteilens (511, 512, 513, 514; 611, 612, 613, 614) eines Vermittlungsergebnisses von dem Vermittlungsserver (142; 450) an zumindest einen von dem ersten Knoten (101; 410) und dem zweiten Knoten (122; 420) die folgenden Schritte umfasst:
- Senden des Vermittlungsergebnisses von dem Vermittlungsserver (142; 450) an den ersten Authentifizierungsserver (110; 430),
- Senden des Vermittlungsergebnisses von dem Vermittlungsserver (142; 450) an den zweiten Authentifizierungsserver (130; 440),
- Senden des Vermittlungsergebnisses von dem ersten Authentifizierungsserver (110; 430) an den ersten Knoten (101; 410),
- Senden des Vermittlungsergebnisses von dem zweiten Authentifizierungsserver (130, 440) an den zweiten Knoten (122; 420).

20. Verfahren nach zumindest einem der vorhergehenden Ansprüche, wobei das von dem Vermittlungsserver (142; 450) an den ersten Authentifizierungsserver (110; 430) gesendete und von dem ersten Authentifizierungsserver (110; 430) an den ersten Knoten (101; 410) gesendete Vermittlungsergebnis weiterhin Folgendes umfasst:
- einen Identifizierer des zweiten Authentifizierungsservers (130; 440) und
- einen Identifizierer des zweiten Knotens (122; 420).

21. Verfahren nach zumindest einem der vorhergehenden Ansprüche, wobei das von dem Vermittlungsserver (142; 450) an den zweiten Authentifizierungsserver (130; 440) gesendete und von dem zweiten Authentifizierungsserver (130; 440) an den zweiten Knoten (122; 420) gesendete Vermittlungsergebnis weiterhin Folgendes umfasst:
- einen Identifizierer des ersten Authentifizierungsservers (110; 430) und
- einen Identifizierer des ersten Knotens (101; 410).

22. Verfahren nach zumindest einem der vorhergehenden Ansprüche, wobei die Anfrage (503; 603) zur Vermittlung einer Authentifizierung zwischen dem ersten Knoten (101; 410) und dem zweiten Knoten (122; 420) und/oder das Vermittlungsergebnis in dem Vermittlungsserver (142; 450) aufgezeichnet werden.

23. System zur Vermittlung einer Authentifizierung in einem Kommunikationsnetz, wobei das System Folgendes umfasst:
- Mittel zum Senden einer Anfrage zur Vermittlung einer Authentifizierung zwischen einem ersten Knoten (101; 410) und zumindest einem zweiten Knoten (122; 420) von dem ersten Knoten an einen Vermittlungsserver (142; 450) mit
- Mitteln zum Authentifizieren des ersten Knotens (101; 410) an einem ersten Authentifizierungsserver (110; 430), der den ersten Knoten verwaltet,
- Mitteln zum Authentifizieren des ersten Authentifizierungsservers (110; 430) an dem ersten Knoten (101; 410),
- Mitteln zum Einrichten einer verschlüsselten Verbindung (501; 601) zwischen dem ersten Knoten (101; 410) und dem ersten Authentifizierungsserver (110; 430),
- Mitteln zum Senden der Anfrage (503; 603) zur Vermittlung der Authentifizierung zwischen dem ersten Knoten (101; 410) und dem zweiten Knoten (122; 420) von dem ersten Knoten (101; 410) an den ersten Authentifizierungsserver (110; 430),
- wobei der Vermittlungsserver (142; 450) imstande ist, eine Authentifizierung zwischen dem ersten Knoten (101; 410) und dem zweiten Knoten (122; 420) zu vermitteln,
- Mitteln zur Authentifizierung des ersten Authentifizierungsservers (110; 430) an dem Vermittlungsserver (142; 450),
- Mitteln zur Authentifizierung des Vermittlungsservers (142; 450) an dem ersten Authentifizierungsserver (110; 430),
- Mitteln zum Einrichten einer verschlüsselten Verbindung (506; 606) zwischen dem ersten Authentifizierungsserver (110; 430) und dem Vermittlungsserver (142; 450), und
- Mitteln zum Senden der Anfrage (503; 603) zur Vermittlung der Authentifizierung zwischen dem ersten Knoten (101; 410) und dem zweiten Knoten (122; 420) von dem ersten Authentifizierungsserver (110; 430) an den Vermittlungsserver (142; 450);
- Mitteln zum Empfangen der Anfrage durch den Vermittlungsserver (142; 450);
- Mitteln zum Bereitstellen einer Authentifizierung zwischen dem Vermittlungsserver (142; 450) und dem zweiten Knoten (122; 420) mit
- Mitteln zum Senden einer Authentifizierungsanfrage (509; 609) von dem Vermittlungsserver (142; 450) an einen zweiten Authentifizierungsserver (130), 440), der den zweiten Knoten verwaltet, und
- Mitteln zum Senden einer Authentifizierungsantwort (510; 610) von dem zweiten Authentifizierungsserver (130; 440) an den Vermittlungsserver (142; 450);
- Mitteln zum Bereitstellen einer Vermittlung zur Authentifizierung zwischen dem ersten Knoten (101; 410) und dem zweiten Knoten (122; 420); und
- Mitteln zum Einrichten einer Verbindung zwischen dem ersten Knoten (101; 410) und dem zweiten Knoten (122; 420).

24. System nach Anspruch 23, wobei der erste Knoten (101; 410) von einem Benutzer gebildet wird.

25. System nach zumindest einem der Ansprüche 23 bis 24, wobei der zweite Knoten (122; 420) von einem Benutzer gebildet wird.

26. System nach zumindest einem der Ansprüche 23 bis 25, wobei der erste und zweite Authentifizierungsserver (130, 440) Information über jeden Knoten beibehalten, den sie verwalten, mit:
- zumindest einem Attribut des verwalteten Knotens, und/oder
- zumindest einer Bedingung, die ein Gegenstückknoten erfüllen muss, um imstande zu sein, mit den verwalteten Knoten zu kommunizieren.

27. System nach zumindest einem der Ansprüche 23 bis 26, wobei der erste und zweite Authentifizierungsserver (130; 440) Information über jeden Gegenstück-Authentifizierungsserver beibehalten, mit dem sie eine vorvereinbarte Beziehung haben, mit:
- zumindest einem Attribut des Gegenstück-Authentifizierungsservers, und/oder
- zumindest einer Bedingung, um Knoten zwischen den Authentifizierungsservern in Zusammenarbeit zu verwalten.

28. System nach zumindest einem der Ansprüche 23 bis 27, wobei der erste und zweite Authentifizierungsserver (130; 440) Information über zumindest einen Vermittlungsserver (142; 450) beibehalten, mit:
- zumindest einem Attribut des Vermittlungsservers (142; 450), und/oder
- Information, die es dem Authentifizierungsserver ermöglicht, den Vermittlungsserver (142; 450) zu authentifizieren.

29. System nach Anspruch 28, wobei die Information, die es dem Authentifizierungsserver ermöglicht, den Vermittlungsserver (142; 450) zu authentifizieren, ein Öffentlicher-Schlüssel-Zertifikat des Vermittlungsservers (142; 450) ist.

30. System nach zumindest einem der Ansprüche 23 bis 29, wobei der Vermittlungsserver (142; 450) Information über jeden Authentifizierungsserver hat, der als Ziel für eine Vermittlung in dem Vermittlungsserver (142; 450) eingetragen ist, mit:
- zumindest einem Attribut des Authentifizierungsservers, und/oder
- Information, die es dem Vermittlungsserver (142; 450) ermöglicht, den Authentifizierungsserver zu authentifizieren.

31. System nach Anspruch 30, wobei die Information, die es dem Vermittlungsserver (142; 450) ermöglicht, den Authentifizierungsserver zu authentifizieren, ein Öffentlicher-Schlüssel-Zertifikat des Authentifizierungsservers ist.

32. Computersoftwareprodukt für die Vermittlung einer Authentifizierung in einem Kommunikationsnetz, wobei das Computersoftwareprodukt, wenn es in einen Speicher geladen und von einer Datenverarbeitungseinrichtung eines Knotens und/oder eines Servers verarbeitet wird, dazu ausgelegt ist, ein Verfahren nach zumindest einem der Ansprüche 1 bis 22 durchzuführen.

## Revendications

1. Procédé de médiation d'authentification dans un réseau de communication, dans lequel le procédé comporte les étapes consistant à :
envoyer une demande de médiation d'authentification entre un premier noeud (101 ; 410) et au moins un deuxième noeud (122 ; 420) depuis le premier noeud à un serveur de médiation (142 ; 450) avec les étapes consistant à :
- authentifier le premier noeud (101 ; 410) dans un premier serveur d'authentification (110 ; 430) qui gère le premier noeud,
- authentifier le premier serveur d'authentification (110 ; 430) dans le premier noeud (101 ; 410), établir une connexion cryptée (501 ; 601) entre le premier noeud (101 ; 410) et le premier serveur authentification (110 ; 430),
- envoyer la demande (503 ; 603) de médiation d'authentification entre le premier noeud (101 ; 410) et le deuxième noeud (122 ; 420) depuis le premier noeud (101 ; 410) au premier serveur d'authentification (110 ; 430),
- fournir (504, 505 ; 604, 605) le serveur de médiation (142 ; 450) pouvant servir d'intermédiaire d'authentification entre le premier noeud (101 ; 410) et le deuxième noeud (122 ; 420),
- authentifier le premier serveur d'authentification (110 ; 430) dans le serveur de médiation (142 ; 450),
- authentifier le serveur de médiation (142 ; 450) dans le premier serveur d'authentification (110 ; 430),
- établir une connexion cryptée (506 ; 606) entre le premier serveur d'authentification (110 ; 430) et le serveur de médiation (142 ; 450), et
- envoyer la demande (503 ; 603) de médiation d'authentification entre le premier noeud (103 ; 410) et le deuxième noeud (122 ; 420) depuis le premier serveur d'authentification (110 ; 430) au serveur de médiation (142 ; 450),
- recevoir ladite demande par l'intermédiaire du serveur de médiation (142 ; 450),
- fournir une authentification entre le serveur de médiation (142 ; 450) et le deuxième noeud (122 ; 420) ayant les étapes consistant à :
- envoyer une demande d'authentification (509 ; 609) depuis le serveur de médiation (142 ; 450) à un second serveur d'authentification (130 ; 440) qui gère le deuxième noeud et
- envoyer une réponse d'authentification (510 ; 610) depuis le second serveur d'authentification (130 ; 440) au serveur de médiation (142 ; 450),
- fournir une médiation d'authentification entre le premier noeud (101 ; 410) et le deuxième noeud(122 ; 420), et
- établir une connexion entre le premier noeud (101 ; 410) et le deuxième noeud (122 ; 420).

2. Procédé selon la revendication 1, dans lequel la demande (503 ; 603) de médiation d'authentification entre le premier noeud (101 ; 410) et le deuxième noeud (122 ; 420) comporte :
- un identifiant du deuxième noeud (122 ; 420),
- un identifiant du second serveur d'authentification (130 ; 440), et
- des informations de configuration pour une connexion entre le premier noeud (101 ; 410) et le deuxième noeud (122 ; 420).

3. Procédé selon au moins l'une des revendications précédentes, dans lequel l'étape consistant à fournir (504, 505 ; 604, 605) le serveur de médiation (142 ; 450 comporte les étapes consistant à :
- envoyer une liste d'au moins un serveur de médiation (142 ; 450) où le premier serveur d'authentification (110 ; 430) est enregistré en tant que cible de médiation du premier serveur d'authentification (110 ; 430) au second serveur d'authentification (130 ; 440),
- sélectionner un serveur de médiation (142 ; 450) où le second serveur d'authentification (130 ; 440) est également enregistré en tant que cible de médiation à partir de la liste dans le second serveur d'authentification (130 ; 440),
- envoyer un identifiant du serveur de médiation sélectionné (142 ; 450) depuis le second serveur d'authentification (130 ; 440) au premier serveur d'authentification (110 ; 430).

4. Procédé selon la revendication 3, dans lequel la liste de serveurs de médiation est classée conformément à une priorité des serveurs de médiation.

5. Procédé selon au moins l'une des revendications précédentes, dans lequel l'étape consistant à fournir (504, 505 ; 604, 605) le serveur de médiation (142 ; 450) comporte l'envoi de plusieurs messages entre le premier serveur d'authentification (110 ; 430) et le second serveur d'authentification (130 ; 440).

6. Procédé selon au moins l'une des revendications précédentes, dans lequel l'étape consistant à fournir (504, 505 ; 604, 605) le serveur de médiation (142 ; 450) est exécutée en utilisant des informations concernant des sélections précédentes de serveur de médiation qui sont mémorisées sur le premier serveur d'authentification (110 ; 430).

7. Procédé selon au moins l'une des revendications précédentes, dans lequel le premier serveur d'authentification (110 ; 430) fournit le serveur de médiation (142 ; 450) en envoyant une demande destinée à savoir si le serveur de médiation (142 ; 450) peut servir d'intermédiaire au second serveur d'authentification (130 ; 440), à chaque serveur de médiation (142 ; 450) en utilisant un envoi individuel.

8. Procédé selon au moins l'une des revendications précédentes, dans lequel le premier serveur d'authentification (110 ; 430) fournit un serveur de médiation (142 ; 450) en envoyant une demande destinée à savoir si le serveur de médiation (142 ; 450) peut servir d'intermédiaire au second serveur d'authentification (130 ; 440), à chaque serveur de médiation (142 ; 450) en utilisant une diffusion générale.

9. Procédé selon au moins l'une des revendications précédentes, dans lequel le premier serveur d'authentification (110 ; 430) fournit un serveur de médiation (142 ; 450) en envoyant une demande destinée à savoir si le serveur de médiation peut servir d'intermédiaire au second serveur d'authentification (130 ; 440), à chaque serveur de médiation (142 ; 450) en utilisant une multidiffusion.

10. Procédé selon au moins l'une des revendications précédentes, dans lequel la demande (503 ; 603) de médiation d'authentification entre le premier noeud (101 ; 410) et le second noeud (122 ; 420) depuis le premier serveur d'authentification (110 ; 430) au serveur de médiation (142 ; 450) comporte en outre :
- un identifiant du premier noeud (101 ; 410),
- au moins un attribut du premier noeud (101 ; 410),
- au moins une condition qu'un noeud de partie de compteur doit satisfaire pour pouvoir communiquer avec le premier noeud (101 ; 410).

11. Procédé selon au moins l'une des revendications précédentes, dans lequel la demande d'authentification comporte un identifiant du deuxième noeud (122 ; 420).

12. Procédé selon au moins l'une des revendications précédentes, dans lequel la réponse d'authentification comporte :
- au moins un attribut du deuxième noeud (122 ; 420),
- au moins une condition qu'un noeud de partie de compteur doit satisfaire pour pouvoir communiquer avec le deuxième noeud (122 ; 420), et
- des informations de configuration en vue d'une connexion au deuxième noeud (122 ; 420).

13. Procédé selon au moins l'une des revendications précédentes, dans lequel l'étape consistant à fournir une médiation d'authentification entre le premier noeud (101 ; 410) et le deuxième noeud (122 ; 420) comporte les étapes consistant à :
- déterminer si le premier noeud (101 ; 410) est acceptable pour le deuxième noeud (122 ; 420) en tant que partie de compteur de communication sur la base d'au moins un attribut du premier noeud (101 ; 410) et de la au moins une condition qu'un noeud de partie de compteur doit satisfaire pour pouvoir communiquer avec le deuxième noeud (122 ; 420),
- déterminer si le deuxième noeud (122 ; 420) est acceptable pour le premier noeud (101 ; 410) en tant que partie de compteur de communication basée sur le au moins un attribut du deuxième noeud (122 ; 420) et la au moins une condition qu'un noeud de partie de compteur doit satisfaire pour pouvoir communiquer avec le premier noeud (101 ; 410),
- déterminer l'intersection entre les informations de configuration envoyées par le premier serveur d'authentification et les informations de configuration envoyées par le second serveur d'authentification, et
- déterminer une configuration appropriée à partir de l'intersection en tant que résultat de médiation.

14. Procédé selon la revendication 13, dans lequel le serveur de médiation (142 ; 450) effectue une translation entre le modèle d'informations utilisé pour modéliser le au moins un attribut du premier noeud (101 ; 410) et la au moins une condition qu'un noeud de partie de compteur doit satisfaire pour pouvoir communiquer avec le premier noeud (101 ; 410) et le modèle d'informations utilisé pour modéliser le au moins un attribut du deuxième noeud (122 ; 420) et la au moins une condition qu'un noeud de partie de compteur doit satisfaire pour pouvoir communiquer avec le deuxième noeud (122 ; 420).

15. Procédé selon la revendication 13 et/ou la revendication 14, dans lequel le serveur (142 ; 450) récupère à la demande le au moins un attribut du premier noeud (101 ; 410), la au moins une condition qu'un noeud de partie de compteur doit satisfaire pour pouvoir communiquer avec le deuxième noeud (122 ; 420), le au moins un attribut du deuxième noeud (122 ; 420), et la au moins une condition qu'un noeud de partie de compteur doit satisfaire pour pouvoir communiquer avec le premier noeud (101 ; 410) à partir des premier et second serveurs d'authentification (130 ; 440) pendant l'étape consistant à fournir une médiation d'authentification entre le premier noeud (101 ; 410) et le deuxième noeud (122 ; 420).

16. Procédé selon au moins l'une des revendications précédentes, dans lequel l'étape consistant à fournir une médiation d'authentification entre le premier noeud (101 ; 410) et le deuxième noeud (122 ; 420) comporte en outre les étapes consistant à :
- générer une clé de cryptage conformément à la configuration déterminée, et
- ajouter la clé de cryptage générée au résultat de médiation.

17. Procédé selon au moins l'une des revendications 1 à 15, dans lequel l'étape consistant à fournir une médiation d'authentification entre le premier noeud (101 ; 410) et le deuxième noeud (122 ; 420) comportant en outre les étapes consistant à :
- générer une amorce d'une clé de cryptage conformément à la configuration déterminée, et
- ajouter l'amorce générée d'une clé de cryptage au résultat de médiation.

18. Procédé selon au moins l'une des revendications précédentes, dans lequel l'étape consistant à fournir une médiation d'authentification entre le premier noeud (101 ; 410) et le deuxième noeud (122 ; 420) comporte l'étape consistant à distribuer (511, 512, 513, 514 ; 611, 612, 613, 614) un résultat de médiation à partir du serveur de médiation (142 ; 450) à au moins l'un du premier noeud (101 ; 410) et du deuxième noeud (122 ; 420).

19. Procédé selon la revendication 18, dans lequel l'étape consistant à distribuer (511, 512, 513, 514 ; 611, 612, 613, 614) un résultat de médiation à partir du serveur de médiation (142 ; 450) à au moins l'un du premier noeud (101 ; 410) et du deuxième noeud (122 ; 420) comporte les étapes consistant à :
- envoyer le résultat de médiation depuis le serveur de médiation (142 ; 450) au premier serveur d'authentification (110 ; 430),
- envoyer le résultat de médiation depuis le serveur de médiation (142 ; 450) au second serveur d'authentification (130 ; 440),
- envoyer le résultat de médiation depuis le premier serveur d'authentification (110 ; 430) au premier noeud (101 ; 410),
- envoyer le résultat de médiation depuis le second serveur d'authentification (130 ; 440) au deuxième noeud (122 ; 420).

20. Procédé selon au moins l'une des revendications précédentes, dans lequel le résultat de médiation envoyé par le serveur de médiation (142 ; 450) au premier serveur d'authentification (110 ; 430) et envoyé depuis le premier serveur d'authentification (100 ; 430) au premier noeud (101 ; 410) comporte en outre :
- un identifiant du second serveur d'authentification (130 ; 440) et
- un identifiant du deuxième noeud (122 ; 420).

21. Procédé selon au moins l'une des revendications précédentes, dans lequel le résultat de médiation envoyé par le serveur de médiation (142 ; 450) au deuxième serveur d'authentification (130 ; 440) et envoyé depuis le deuxième serveur d'authentification (130 ; 440) au deuxième noeud (122 ; 420) comporte en outre :
- un identifiant du premier serveur d'authentification (110 ; 430) et
- un identifiant du premier noeud (101 ; 410).

22. Procédé selon au moins l'une des revendications précédentes, dans lequel la demande (503 ; 603) de médiation d'authentification entre le premier noeud (101 ; 410) et le deuxième noeud (122 ; 420) et/ou le résultat de médiation sont enregistrés dans le serveur de médiation (142 ; 450).

23. Système de médiation d'authentification dans un réseau de communication, dans lequel le système comporte :
des moyens pour envoyer une demande de médiation d'authentification entre un premier noeud (101 ; 410) et au moins un deuxième noeud (122 ; 420) depuis le premier noeud à un serveur de médiation (142 ; 450) ayant :
- des moyens pour authentifier le premier noeud (101 ; 410) dans un premier serveur d'authentification (110 ; 430) qui gère le premier noeud,
- des moyens pour authentifier le premier serveur d'authentification (110 ; 430) dans le premier noeud (101 ; 410),
- des moyens pour établir une connexion cryptée (501 ; 601) entre eux le premier noeud (101 ; 410) et le premier serveur authentification (110 ; 430),
- des moyens pour envoyer la demande (503 ; 603) de médiation d'authentification entre le premier noeud (101 ; 410) et le deuxième noeud (122 ; 420) depuis le premier noeud (101 ; 410) au premier serveur d'authentification (110 ; 430),
- le serveur de médiation (142 ; 450) pouvant servir d'intermédiaire d'authentification entre le premier noeud (101 ; 410) et le deuxième noeud (122 ; 420),
- des moyens pour authentifier le premier serveur d'authentification (110 ; 430) dans le serveur de médiation (142 ; 450),
- des moyens pour authentifier le serveur de médiation (142 ; 450) dans le premier serveur d'authentification (110 ; 430),
- des moyens pour établir une connexion cryptée (506 ; 606) entre le premier serveur d'authentification (110 ; 430 et le serveur de médiation (142 ; 450), et
- des moyens pour envoyer la demande (503 ; 603) de médiation d'authentification entre le premier noeud (103 ; 410) et le deuxième noeud (122 ; 420) depuis le premier serveur d'authentification (110 ; 430) au serveur de médiation (142 ; 450),
- des moyens pour recevoir ladite demande par l'intermédiaire du serveur de médiation (142 ; 450),
- des moyens pour fournir une authentification entre le serveur de médiation (142 ; 450) et le deuxième noeud (122 ; 420) ayant :
- des moyens pour envoyer une demande d'authentification (509 ; 609) depuis le serveur de médiation (142 ; 450) à un second serveur d'authentification (130 ; 440) qui gère le deuxième noeud et
- des moyens pour envoyer une réponse d'authentification (510 ; 610) depuis le second serveur d'authentification (130 ; 440) au serveur de médiation (142 ; 450),
- des moyens pour fournir une médiation d'authentification entre le premier noeud (101 ; 410) et le deuxième noeud(122 ; 420), et
- des moyens pour établir une connexion entre le premier noeud (101 ; 410) et le deuxième noeud (122 ; 420).

24. Système selon la revendication 23, dans lequel le premier noeud (101 ; 410) est constitué par un utilisateur.

25. Système selon au moins l'une des revendications 23 à 24, dans lequel le deuxième noeud (122 ; 420) est constitué par un utilisateur.

26. Système selon au moins l'une des revendications 23 à 25, dans lequel les premier et second serveurs d'authentification (130 ; 440) conservent des informations concernant chaque noeud qu'ils gèrent comportant :
- au moins un attribut du noeud géré, et/ou
- au moins une condition qu'un noeud de partie de compteur doit satisfaire pour pouvoir communiquer avec le noeud géré.

27. Système selon au moins l'une des revendications 23 à 26, dans lequel les premier et second serveurs d'authentification (130 ; 440) conservent des informations concernant chacun des serveurs d'authentification de partie de compteur avec lesquels ils ont une relation pré-convenue comportant :
- au moins un attribut du serveur d'authentification de partie de compteur, et/ou
- au moins une condition afin de gérer des noeuds de manière coopérative entre les serveurs d'authentification.

28. Système selon au moins l'une des revendications 23 à 27, dans lequel les premier et second serveurs d'authentification (130 ; 440) conservent des informations concernant au moins un serveur de médiation (142 ; 450) comportant :
- au moins un attribut du serveur de médiation (142 ; 450), et/ou
- des informations qui permettent au serveur d'authentification d'authentifier le serveur de médiation (142 ; 450).

29. Système selon la revendication 28, dans lequel les informations qui permettent au serveur d'authentification d'authentifier le serveur de médiation (142 ; 450) sont un certificat de clé publique du serveur de médiation (142 ; 450).

30. Système selon au moins l'une des revendications 23 à 29, dans lequel le serveur de médiation (142 ; 450) conservent des informations concernant chaque serveur d'authentification qui est enregistré en tant que cible de médiation dans le serveur de médiation (142 ; 450) comportant :
- au moins un attribut du serveur d'authentification, et/ou
- des informations qui permettent au serveur de médiation (142 ; 450) d'authentifier le serveur d'authentification.

31. Système selon la revendication 30, dans lequel les informations qui permettent au serveur de médiation (142 ; 450) d'authentifier le serveur d'authentification sont un certificat de clé publique du serveur d'authentification.

32. Produit logiciel informatique pour la médiation d'authentification dans un réseau de communication, le produit logiciel informatique étant adapté, lorsqu'il est chargé dans une mémoire et traité par des moyens de traitement de données d'un noeud et/ou d'un serveur, pour mettre en oeuvre un procédé conformément à au moins l'une des revendications 1 à 22.
